# EUROPEAN PATENT APPLICATION

(11) **EP 2 653 767 A1**
(43) Date of publication of application: **23.10.2013**
(21) Application number: 12164503.0
(22) Date of filing: 17.04.2012
(51) Int. Cl.: F16L 23/028, F16L 23/032

(54) **Joint flange**

(71) Applicant: Han Len Ltd., Taipei City 108 (TW)
(72) Inventor: Chung, Wen-Tsung, 108 Taipei City (TW)
(74) Representative: Lang, Christian

(57) **Abstract**

A joint flange (A) comprising a first clamping piece (5) and a second clamping piece (6), wherein the first clamping piece (5) and the second clamping piece (6) assume a C-shape to form clamp openings at a center of inner rim of the clamping pieces (5, 6), and two ends of the first clamping piece (5) and the second clamping piece (6) are provided respectively with latching parts (53) and positioning parts (54), with that when the joint flange (A) is to be used, the first clamping piece (5) and the second clamping piece (6) are clamped opposite to each other on a contracted rim of an expansion fitting (2) to constitute the joint flange (A) by joining the latching parts (53) with the positioning parts (54), providing for locking with pipes (3) and allowing the joint flange (A) to be assembled and dismantled conveniently.

## Description

### BACKGROUND OF THE INVENTION

### a) Field of the Invention

The present invention relates to a joint flange A, and more particularly to a joint flange A which provides for combining an expansion fitting 2 with pipes 3, so that the expansion fitting 2 can be subjected to a uniform force after combining, in order to prevent the expansion fitting 2 from damage by being subjected to too large a force and to allow a leak-proof effect to an expansion connector to be more rigorous, thereby enabling the joint flange A to be assembled and dismembered more conveniently.

### b) Description of the Prior Art

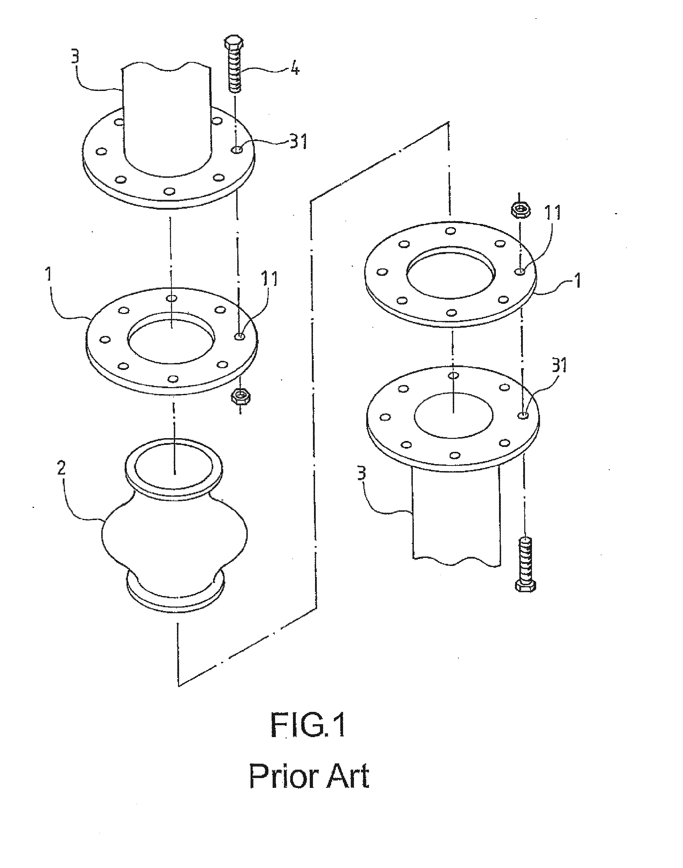

A pipe is to provide a path of transmission for all kinds of fluids, including liquids and gases. All kinds of expansion connectors in the pipes are used primarily to absorb expansion or contraction resulted from a change of temperature, avoiding damage by the expansion or contraction and reducing leakage of the fluids in the pipes. Referring to FIG. 1, it shows a conventional expansion connector having an annular joint flange 1. A surface of the joint flange 1 is provided with plural fixing holes 11 that are spaced apart. After the joint flange 1 has been sheathed on a contracted rim of an expansion fitting 2, pipes 3 with fixing holes 31 are put at openings of the expansion fitting 2 and then the fixing holes 31, 11 are locked by screws 4. This conventional expansion connector is provided with following shortcomings upon assembling:
1. When assembling, the joint flange 1 should pass through the openings of the expansion fitting 2; therefore, it is rather inconvenient in assembling.
2. As there is no limitation when locking, the expansion fitting 2 can be easily subjected to a non-uniform force that the leak-proof effect will be reduced. If the expansion fitting 2 is subjected to too large a force, then the expansion fitting 2 can be damaged easily.
3. When the expansion fitting 2 is damaged, as it is difficult to be dismembered, the expansion fitting 2 cannot be recycled, thereby endangering the environment.

Accordingly, the present invention discloses a leak-proof structure of an expansion connector, such that the expansion connector can be assembled more conveniently and can be easily dismembered for recycling.

### SUMMARY OF THE INVENTION

The primary object of the present invention is to provide a joint flange, allowing an expansion fitting to be subjected to a uniform force after the expansion fitting has been joined with the joint flange, in order to prevent the expansion fitting from damage by being subjected to too large a force and to enable a leak-proof effect to an expansion connector to be more rigorous, thereby allowing the joint flange to be assembled and dismembered more conveniently to facilitate dismembering and recycling the joint flange for environment protection.

The abovementioned joint flange is assembled by a first clamping piece and a second clamping piece. The first clamping piece and the second clamping piece are roughly in a C-shape to form clamp opening at a center of inner rim of the clamping pieces. A periphery of the first clamping piece and the second clamping piece is provided with a protruding wall that is extended upward vertically with a proper height; whereas, two ends of the first clamping piece and the second clamping piece are provided respectively with latching parts and positioning parts. In addition, a surface of the first clamping piece and the second clamping piece is provided with plural fixing holes that are spaced apart. When the joint flange is to be used, the first clamping piece and the second clamping piece are clamped opposite to each other in a contracted rim of an expansion fitting and are locked with pipes from the fixing holes by joining the latching parts with the positioning parts. Furthermore, limitation is constituted by the protruding walls, allowing the expansion fitting to be subjected to a uniform force, so that the expansion fitting can be prevented from damage by being subjected to too large a force and a leak-proof effect to an expansion connector can be more rigorous, thereby allowing the joint flange to be assembled and dismembered more conveniently.

For the abovementioned joint flange, two ends of the latching parts and the positioning parts of the first clamping piece and the second clamping piece are provided respectively with corresponding stage parts to constitute positioning by latching the stage parts with respect to each other.

To enable a further understanding of the said objectives and the technological methods of the invention herein, the brief description of the drawings below is followed by the detailed description of the preferred embodiments.

### BRIEF DESCRIPTION OF THE DRAWINGS

FIG. 1 shows a schematic view of an implementation of assembling a conventional flange.
FIG. 2 shows a three-dimensional exploded view of the present invention.
FIG. 3 shows a plan view of clamping pieces of the present invention.
FIG. 4 shows a schematic view of an implementation of joining the clamping pieces, according to the present invention.
FIG. 5 shows a cutaway view of the present invention after being assembled.
FIG. 6 shows a plan view of a second embodiment of the clamping pieces, according to the present invention.
FIG. 7 shows a schematic view of assembling of the second embodiment of the clamping pieces, according to the present invention.

### DETAILED DESCRIPTION OF THE PREFERRED EMBODIMENTS

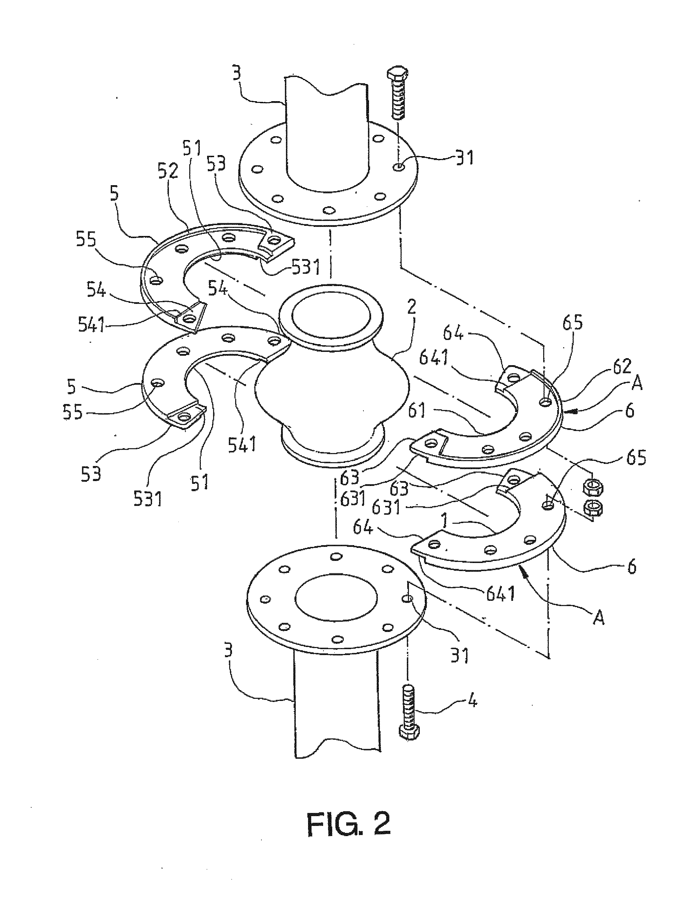

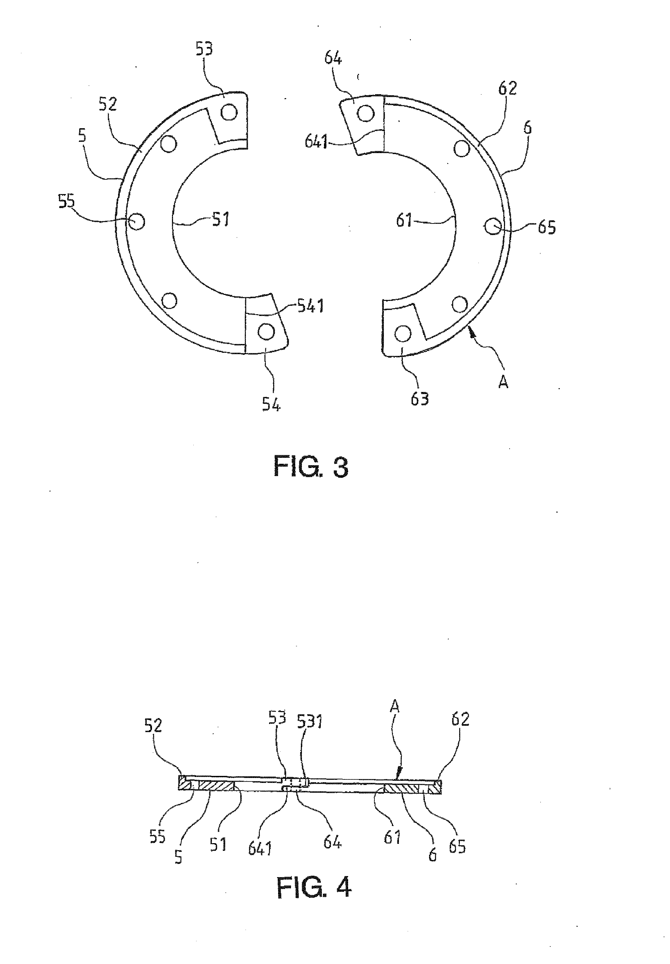

Referring to FIG. 2 and FIG. 3, it shows a three-dimensional exploded view of the present invention and a plan view of clamping pieces of the present invention. As shown in the drawings, the present invention discloses a joint flange A that is assembled by a first clamping piece 5 and a second clamping piece 6. The first clamping piece 5 and the second clamping piece 6 are roughly in a C-shape to form clamp openings 51, 61 at a center of inner rim of the first and second clamping piece 5, 6. A periphery of the first clamping piece 5 and the second clamping piece 6 is provided with a protruding wall 52, 62 that is extended upward vertically with a proper height.

An end of the first clamping piece 5 and the second clamping piece 6 is provided with a latching part 53, 63 constituted by a stage part 531, 631; whereas, the other end is provided with a positioning part 54, 64 constituted by a stage part 541, 641. In addition, a surface of the first clamping piece 5 and the second clamping piece 6 is provided with plural fixing holes 55, 65 that are spaced apart.

By assembling the abovementioned components, the joint flange A is formed, such that when using the joint flange A, the first clamping piece 5 and the second clamping piece 6 are clamped opposite to each other in a contracted rim of an expansion fitting 2 and by joining the latching parts 53, 63 with the positioning parts 54, 64, pipes 3 are put above and below the expansion fitting 2, followed by using screws 4 to penetrate from fixing holes 31 of the pipes 3 as well as the fixing holes 55, 65 of the first clamping piece 5 and the second clamping piece 6 to lock the first clamping piece 5 and the second clamping piece 6 with the pipes 3. Furthermore, limitation to the expansion fitting 2 is formed by the protruding walls 52, 62, so that the expansion fitting 2 can be subjected to a uniform force, thereby preventing the expansion fitting 2 from damage by being subjected to too large a force and allowing a leak-proof effect to an expansion connector to be more rigorous, which further facilitates assembling and dismembering the joint flange A.

Referring to FIG. 4, it shows a schematic view of an implementation of joining the clamping pieces, according to the present invention. As shown in the drawing, when the joint flange A of the present invention is to be assembled, the first clamping piece 5 and the second clamping piece 6 are clamped opposite to each other in the contracted rim of the expansion fitting 2, and after the first clamping piece 5 and the second clamping piece 6 have been clamped, as the latching part 53 (63) and the positioning part 54 (64) at the ends are corresponding to the stage parts 531 (631), 541 (641), the stage parts 531 (631), 541 (641) can be overlapped with respect to each other to join the first clamping piece 5 with the second clamping piece 6, without requiring the flange to pass through the openings of the expansion fitting 2, like a conventional flange. Therefore, the assembling work is rather convenient and fast; in addition, when the expansion fitting 2 is damaged, the first clamping piece 5 can be separated with the second clamping piece 6 by just releasing the screws 4 to facilitate recycling the expansion fitting 2.

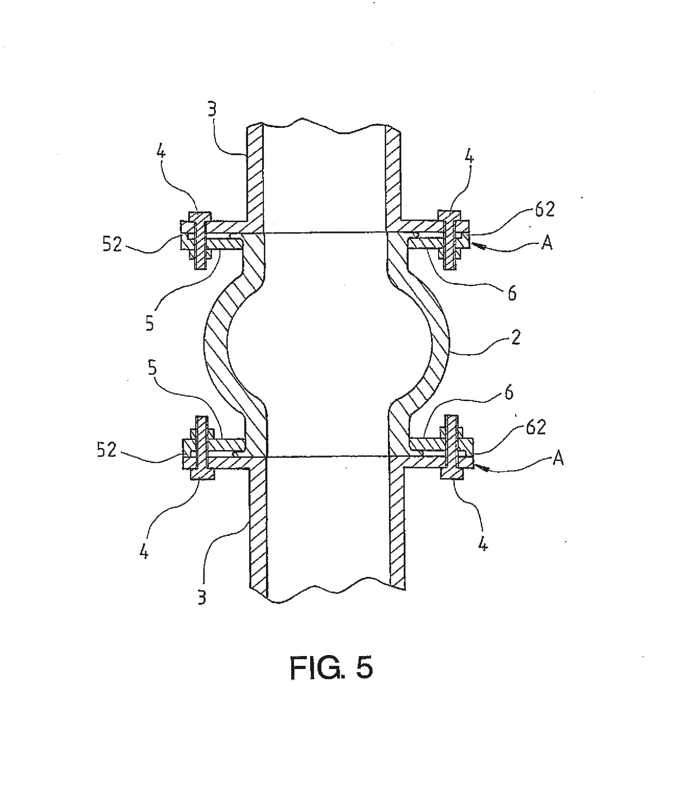

Referring to FIG. 5, it shows a cutaway view of the present invention after being assembled. As shown in the drawing, after assembling, the first clamping piece 5 and the second clamping piece 6 are clamped opposite to each other in the contracted rim of the expansion fitting 2 and are joined by overlapping the corresponding stage parts, so as to constitute the joint flange A. After the first clamping piece 5 and the second clamping piece 6 have been locked with the pipes 3, the protruding walls 52, 62 at the peripheries are able to abut at bottom surfaces of the pipes 3 to form the function of limitation, such that the expansion fitting 2 can be subjected to a uniform force, thereby preventing the expansion fitting 2 from damage due to too large a force to be subjected and allowing the leak-proof effect to the expansion connector to be more rigorous.

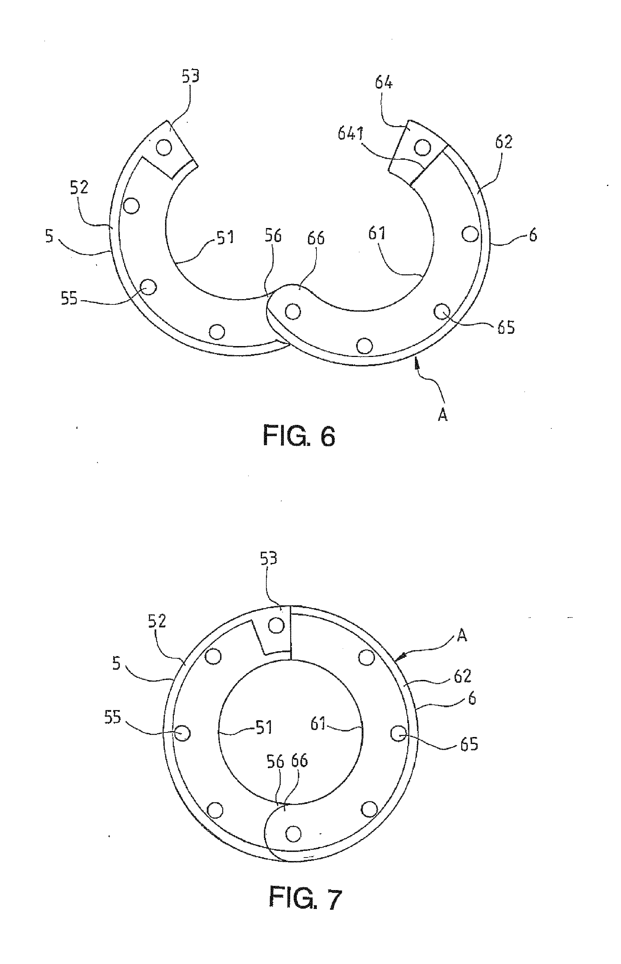

Referring to FIG. 6 and FIG. 7 at a same time, a second embodiment of the present invention includes a joint flange A that is formed by a first clamping piece 5 and a second clamping piece 6. The first clamping piece 5 and the second clamping piece 6 are roughly in a C-shape to form clamp openings 51, 61 at a center of inner rim of the first and second clamping piece 5, 6. A periphery of the first clamping piece 5 and the second clamping piece 6 is provided with a protruding wall 52, 62 that is extended upward vertically with a proper height.

An end of the first clamping piece 5 and the second clamping piece 6 is provided respectively with a latching part 53 having a stage part 531 (not shown in the drawings, please refer to FIG. 2) and a positioning part 64 having a stage part 641. In addition, a surface of the first clamping piece 5 and the second clamping piece 6 is provided with plural fixing holes 55, 65 that are spaced apart; whereas, the other end of the first clamping piece 5 and the second clamping piece 6 is provided respectively with a pivot part 56, 66. By locking together the pivot parts 56, 66, the first clamping piece 5 and the second clamping piece 6 can be opened and closed using the pivot parts 56, 66 as pivots.

By assembling the abovementioned components, when the joint flange A is used, the first clamping piece 5 and the second clamping piece 6 are opened and clamped opposite to each other in a contracted rim of an expansion fitting, so as to form a different type of assembling method to the joint flange A by joining the latching part 53 with the positioning part 64.

Accordingly, in the present invention, the joint flange is formed by the clamping pieces having the latching parts and the positioning parts, along with the protruding walls at the peripheries of the clamping pieces. The present invention enables the expansion fitting to be subjected to a uniform force after the expansion fitting has been combined with the joint flange, so that the expansion fitting can be prevented from damage by being subjected to too large a force and the leak-proof effect to the expansion connector can be more rigorous, which allows the joint flange to be assembled and dismembered more conveniently and facilitates dismembering the joint flange for recycling to protect the environment.

It is of course to be understood that the embodiments described herein is merely illustrative of the principles of the invention and that a wide variety of modifications thereto may be effected by persons skilled in the art without departing from the spirit and scope of the invention as set forth in the following claims.

## Claims

1. A joint flange comprising a first clamping piece 5 and a second clamping piece 6, wherein the first clamping piece 5 and the second clamping piece 6 assume a C-shape to form clamp openings at a center of inner rim of the clamping pieces 5, 6, and two ends of the first clamping piece 5 and the second clamping piece 6 are provided respectively with latching parts 53 and positioning parts 54, with that when the joint flange A is to be used, the first clamping piece 5 and the second clamping piece 6 are clamped opposite to each other in a contracted rim of an expansion fitting 2 to constitute the joint flange A by joining the latching parts 53 with the positioning parts 54, providing for locking with pipes 3 and allowing the joint flange A to be assembled and dismembered more conveniently.

2. The joint flange according to claim 1, wherein two ends of the latching parts 53 and the positioning parts 54 of the first clamping piece 5 and the second clamping piece 6 are provided respectively with corresponding stage parts 531, 541, 631, 641, with that positioning is formed by joining the stage parts 531, 541, 631,641.

3. The joint flange according to claim 1, wherein a surface of the first clamping piece 5 and the second clamping piece 6 is provided with plural fixing holes 55 that are spaced apart, with that the plural fixing holes 55 are penetrated by screws 4 to lock with the pipes 3.

4. The joint flange according to claim 1, wherein a periphery of the first clamping piece 5 and the second clamping piece 6 is provided with a protruding wall 52, 62 that is extended upward vertically with a proper height, such that after the first clamping piece 5 and the second clamping piece 6 have been locked with the pipes 3, the expansion fitting 2 is subjected to a uniform force by the protruding walls 52, 62 that constitute limitation, thereby preventing the expansion fitting 2 from damage due to too large a force and allowing a leak-proof effect to an expansion connector to be more rigorous.

5. A joint flange comprising a first clamping piece 5 and a second clamping piece 6, wherein the first clamping piece 5 and the second clamping piece 6 assume a C-shape to form clamp openings at a center of inner rim of the clamping pieces 5, 6, one end of the first clamping piece 5 and the second clamping piece 6 is provided respectively with a latching part 53 and a positioning part 64, whereas the other end of the first clamping piece 5 and the second clamping piece 6 is provided respectively with a pivot part 56, 66, with that by locking together the pivot parts 56, 66, the first clamping piece 5 and the second clamping piece 6 are opened and closed using the pivot parts 56, 66 as pivots, and when the joint flange A is to be used, the first clamping piece 5 and the second clamping piece 6 are clamped opposite to each other in a contracted rim of an expansion fitting 2 to constitute the joint flange A by joining the latching part 53 with the positioning part 64, providing for locking with pipes 3 and allowing the joint flange A to be assembled and dismembered more conveniently.

6. The joint flange according to claim 5, wherein two ends of the latching part 53 and the positioning part 54 of the first clamping piece 5 and the second clamping piece 6 are provided respectively with corresponding stage parts 531, 541, 631, 641, with that positioning is formed by joining the stage parts 531, 541, 631,641.

7. The joint flange according to claim 5, wherein a surface of the first clamping piece 5 and the second clamping piece 6 is provided with plural fixing holes 55 that are spaced apart, with that the plural fixing holes 55 are penetrated by screws 4 to lock with the pipes 3.

8. The joint flange according to claim 5, wherein a periphery of the first clamping piece 5 and the second clamping piece 6 is provided with a protruding wall 52, 62 that is extended upward vertically with a proper height, such that after the first clamping piece 5 and the second clamping piece 6 have been locked with the pipes 3, the expansion fitting 2 is subjected to a uniform force by the protruding walls 52, 62 that constitute limitation, thereby preventing the expansion fitting 2 from damage due to too large a force and allowing a leak-proof effect to an expansion connector to be more rigorous.
